# EUROPEAN PATENT SPECIFICATION

(11) **EP 1 233 660 B1**
(45) Date of publication and mention of the grant of the patent: **11.04.2007**
(21) Application number: 02075585.6
(22) Date of filing: 12.02.2002
(51) Int. Cl.: H05H 1/34

(54) **Powdered metal emissive elements**
Emittierende Einheiten aus Metallpulvern
Eléments émetteurs en métal pulvérisé

(30) Priority: 20.02.2001 US 789115
(43) Date of publication of application: 21.08.2002
(73) Proprietor: THE ESAB GROUP, INC., Florence, South Carolina 29501 (US)
(72) Inventor: Nemchinsky, Valerian, Florence, South Carolina 29501 (US)
(74) Representative: Johansson, Lars-Erik

(56) References cited:
- US-A- 3 198 932
- US-A- 3 930 139
- US-A- 4 229 873
- US-A- 6 066 827
- US-A- 6 130 399

## Description

### FIELD OF THE INVENTION

The present invention relates to plasma arc torches and, more particularly, to an electrode for supporting an electric arc in a plasma arc torch. The invention also relates to an electrode subassembly and to methods of forming an electrode.

### BACKGROUND OF THE INVENTION

Plasma arc torches are commonly used for the working of metals, including cutting, welding, surface treatment, melting, and annealing. Such torches include an electrode which supports an arc which extends from the electrode to the workpiece in the transferred arc mode of operation. It is also conventional to surround the arc with a swirling vortex flow of gas, and in some torch designs it is conventional to also envelop the gas and arc with a swirling jet of water.

The electrode used in conventional torches of the described type typically comprises a metallic tubular member composed of a material of high thermal conductivity, such as copper or a copper alloy. The forward or discharge end of the tubular electrode includes a bottom end wall having an emissive insert embedded therein which supports the arc. The insert is composed of a material which has a relatively low work function, which is defined in the art as the potential step, measured in electron volts (ev), which permits thermionic emission from the surface of a metal at a given temperature. In view of its low work function, the insert is thus capable of readily emitting electrons when an electrical potential is applied thereto. Commonly used emissive materials include hafnium, zirconium, tungsten, and their alloys.

A problem associated with torches of the type described above is the short service life of the electrode, particularly when the torch is used with an oxidizing gas, such as oxygen or air. More specifically, the emissive insert erodes during operation of the torch, such that a cavity or hole is defined between the emissive insert and the metallic holder. When the cavity becomes large enough, the arc "jumps" or transfers from the emissive insert to the holder, which typically destroys the electrode. To prevent or at least impede the arc from jumping to the metallic holder, some electrodes include a relatively non-emissive separator that is disposed between the emissive insert and the metallic holder. Separators are disclosed in U.S. Patent No. 5,023,425, which is assigned to the assignee of the present invention and incorporated herein by reference.

U.S. Patent No. 3,198,932 discloses an electrode for use in a plasma arc torch that attempts to improve the longevity of the electrode and thus the performance of the torch. In this regard, the '932 patent discloses electrodes having emissive inserts formed from powdered materials, such as zirconium, lanthanum, thorium, or strontium. In addition, silver powder can be added to the powdered materials, which improves the heat transfer from the emissive insert without substantially increasing the work function. The emissive insert is inserted into the holder, which is typically formed of copper, but can also be formed from silver.

Another method used in forming conventional torches as mentioned by the '932 patent provides securing the emissive insert in the holder by way of brazing. According to this method, the temperature of the brazing material, which is typically silver alloy, is raised to its melting point in order to braze the emissive insert to the copper holder. However, brazing requires an additional manufacturing step and involves the addition of expensive material to the finished electrode.

US patent No. 6,066,827 discloses an electrode that comprises a holder that has a receptacle in which an emissive element assembly is mounted. The emissive element includes a relatively non-emissive separator, which is positioned in the receptacle coaxially about the emissive element. The separator is composed of a metallic material having a work function, which is greater than that of the material of the holder, and also greater than that of the material of the emissive element. A front face of the emissive element includes at least two distinct components formed from different materials. An emissive material comprises one of the components and is composed of a metallic material, which has a relatively low work function. A conductive material comprises the other component of the emissive element. The conductive material provides a path for the arc to travel from the emissive element periphery to the element centre region to reduce start erosion of the element.

Thus, it is desirable to retain the benefits of using powdered materials to form the emissive element of a plasma arc torch electrode. It is also desirable to further improve the thermal conductivity of the electrode. It is also desirable to improve thermal conductivity of the emissive element without using a brazing process. Yet it is also desirable to maintain a strong bond between the emissive element and the holder.

### SUMMARY OF THE INVENTION

The present invention is set forth in the claims. It was developed to improve upon conventional electrodes and methods of making electrodes, and more particularly electrodes and methods of making electrodes disclosed in the above-referenced '932 patent. It has been discovered that the difficulties of the electrodes described above, namely improving the thermal and electrical conductivity of electrodes having powdered metal emissive elements, can be overcome by providing an electrode having thermal conductive paths extending from within the emissive element to a separator positioned between the emissive element and a metallic holder.

This is accomplished by providing an emissive element comprising powders of at least two materials, and a separator that is formed of a material that, according to one embodiment, is substantially similar to one of the materials forming the emissive element. This assembly is inserted in a metallic holder, such as a copper holder, and heated to a temperature such that thermal conductive paths are formed within the emissive element and extend to the separator. After the heating process, the materials of the emissive element have distinct phases, and at least part of the phase of the second material is arranged within the emissive element to form thermal and electrical conductive paths from within the emissive element to the separator. Advantageously, the thermal conductive paths are formed of the material common to both the emissive element and the separator, although the thermal conductive paths can be formed from two or more materials. In one embodiment, the emissive element comprises powders of silver and hafnium, the separator comprises silver, and the thermal conductive paths are formed of silver. It is also possible to add dopants, such as lanthanum oxide, in order to further improve the emissivity of the electrode. The thermal conductive paths improve the performance of the electrode by conducting heat generated by the arc from the emissive element to the separator at a rate greater than electrodes not having thermal conductive paths.

Methods of forming an electrode according to the present invention are also provided. In a presently preferred embodiment, powders from at least two different materials are mixed together, at least one of the materials being emissive. The mixture is deposited within an opening in a separator formed from a relatively non-emissive, electrically and thermally conductive material, such as silver. More specifically, the deposited mixture is compressed into the opening defined by the separator to not less than 60% theoretical (100% theoretical being defined as a solid material having no voids present therein), and preferably to about 80%-90% theoretical.

The combination is heated to define a unitary emissive element bonded to the separator. In particular, the mixture is heated to cause a type of diffusion bonding to take place between the emissive element and the separator. The diffusion bonding results in the formation of the thermal conductive paths between the emissive element and the separator. For example, where the first powdered material comprises hafnium and the second material comprises silver, it is sufficient to heat the mixture to approximately 1400° F (760 °C) to achieve the diffusion bonding and form the thermal conductive paths.

Thus, the present invention provides an electrode and method of making an electrode having improved heat transfer properties over conventional plasma arc torches. By heating powdered materials to form thermal conductive paths between the emissive element and the separator, the emissive element and separator form a relatively strong bond therebetween while improving the thermal conductivity between the emissive element and the separator. In addition, by using a separator being formed of a material substantially similar to one of the powdered materials present in the emissive element, the cost of the electrode is reduced compared to providing an entire metallic holder formed from the same material.

### BRIEF DESCRIPTION OF THE DRAWINGS

Having thus described the invention in general terms, reference will now be made to the accompanying drawings, which are not necessarily drawn to scale, wherein:
- Figure 1: is a sectioned side elevational view of a plasma arc torch which embodies the features of the present invention;
- Figure 2: is an enlarged perspective view of an electrode in accordance with the present invention;
- Figure 3: is an enlarged sectional side view of an electrode in accordance with the present invention;
- Figures 4-7: are schematic views illustrating the steps of a preferred method of fabricating the electrode in accordance with the invention;
- Figure 8: is a greatly enlarged sectional view of the electrode of the present invention as seen along lines 8--8 of Figure 7 shortly before the pressing and heating operations;
- Figure 9: is a greatly enlarged sectional view of the electrode of the present invention as seen along lines 8--8 of Figure 7, shortly after the pressing and heating operations;
- Figure 10: is an enlarged sectional side view of an electrode in accordance with the present invention; and
- Figure 11: is an end elevational view of the finished electrode in accordance with the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

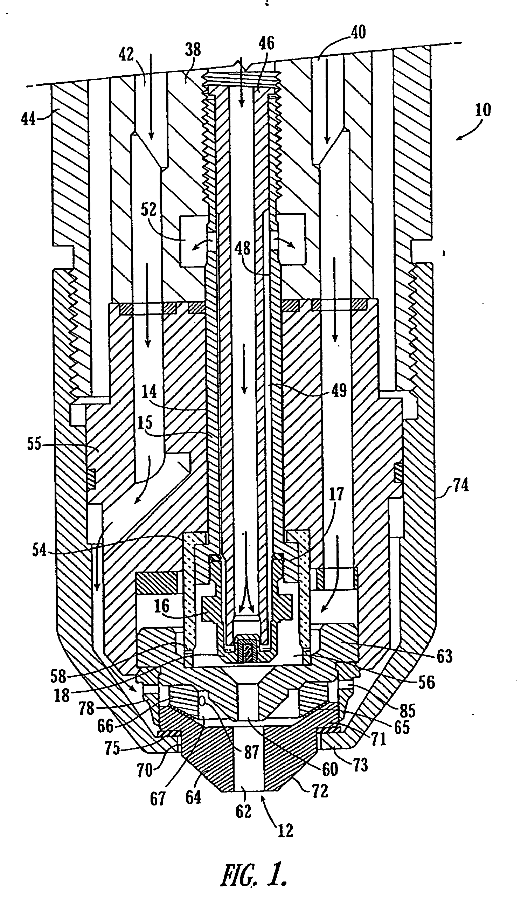

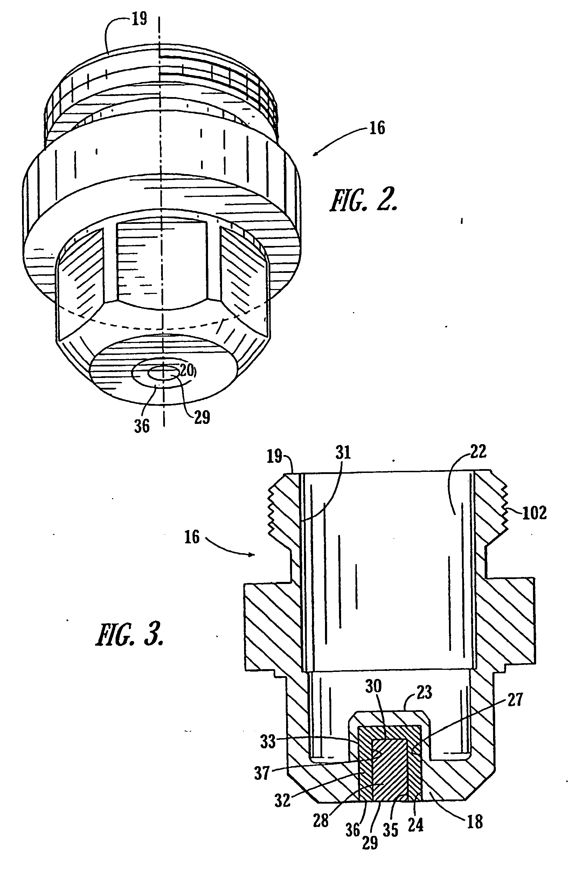

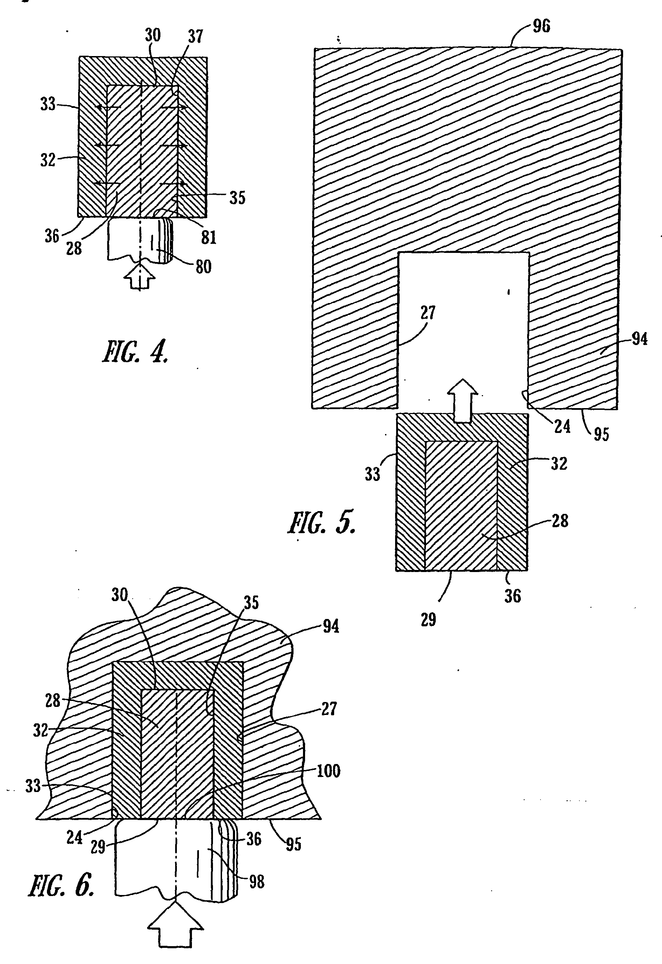

With reference to Figures 1-3, a plasma arc torch **10** embodying the features of the present invention is depicted. The torch **10** includes a nozzle assembly **12** and a tubular electrode **14.** The electrode **14** preferably is made of copper or a copper alloy, and is composed of an upper tubular member **15** and a lower cup-shaped member or holder **16.** The upper tubular member **15** is of elongate open tubular construction and defines the longitudinal axis of the torch **10.** The upper tubular member **15** includes an internally threaded lower end portion **17.** The holder **16** is also of tubular construction, and includes a lower front end and an upper rear end. A transverse end wall **18** closes the front end of the holder **16,** and the transverse end wall **18** defines an outer front face **20.** The rear end of the holder **16** is externally threaded and is threadedly joined to the lower end portion **17** of the upper tubular member **15.**

The holder **16** is open at the rear end **19** thereof such that the holder is of cup-shaped configuration and defines an internal cavity **22.** The internal cavity **22** has a surface **31** that includes a cylindrical post **23** extending into the internal cavity along the longitudinal axis. A generally cylindrical cavity **24** is formed in the front face **20** of the end wall **18** and extends rearwardly along the longitudinal axis and into a portion of the holder **16.** The cavity **24** includes inner side surface **27.**

A relatively non-emissive separator **32** is positioned in the cavity **24** and is disposed coaxially along the longitudinal axis. The separator **32** has an outer peripheral wall **33** extending substantially the length of the cavity **24.** The peripheral wall **33** is illustrated as having a substantially constant outer diameter over the length of the separator, although it will be appreciated that other geometric configurations would be consistent with the scope of the invention, such as frustoconical. The separator **32** also defines an internal cavity **35** having a surface **37.** The separator **32** also includes an outer end face **36** which is generally flush with the front face **20** of the holder **16.**

An emissive element or insert **28** is positioned in the separator **32** and is disposed coaxially along the longitudinal axis. More specifically, the emissive element **28** is secured to the separator **32** by an interference or press fit coupled with an advantageous form of diffusion bonding, which is effected by heating the separator and emissive element. The emissive element **28** has a circular outer end face **29** lying in the plane of the front face **20** of the holder **16** and the outer end face **36** of the separator **32.** The emissive element **28** also includes a generally circular inner end face **30** which is disposed in the cavity **35** defined by the separator **32** and is opposite the outer end face **29**. The inner end face **30,** however, can have other shapes, such as pointed, polygonal, or spherical, in order to assist in securing the emissive element to the separator **32.** In addition, the diameter of the emissive element **28** is about 30-80 percent of the outer diameter of the end face **36** of the separator **32,** which has a radial thickness of at least about 0.25 mm (0.01 inch) at the outer end face **36** and along its entire length. As a specific example, the emissive element **28** typically has a diameter of about 0.08 inch and a length of about 0.25 inch, and the outer diameter of the separator **32** is about 0.25 inch.

The emissive element **28** is composed of powders of at least two materials, one of which is known to be a good emitter. Suitable examples of such materials are hafnium, zirconium, tungsten, and mixtures thereof. One of the materials forming the emissive element **28** must also have a relatively greater thermal conductivity, and preferably a relatively greater electrical conductivity as well, compared to the other materials forming the emissive element. Preferably, this material is substantially similar to the material forming the separator **32,** as discussed more fully below.

Other materials may also be present in the emissive element **28,** particularly materials that increase the emissivity of the electrode during operation of the plasma arc torch. These emission enhancing materials, known as dopants, can be added in small amounts, such as between 0.1 -10.0% of the total weight composition of the emissive element. Presently preferred dopants are lanthanum oxide, cerium oxide, yittrium oxide, calcium oxide, strontium oxide, barium oxide, and mixtures thereof. Other dopants can also be used to achieve similar benefits, although the oxides mentioned above are known to have relatively high melting temperatures and/or other beneficial qualities.

The separator **32** is composed of a metallic material that less readily supports the arc compared to the holder **16** and the emissive element **28.** In a preferred embodiment, the separator **32** comprises silver as the primary material, although other metallic materials, such as gold, platinum, aluminum, rhodium, iridium, palladium, nickel, and alloys thereof, may also be used. As mentioned above, the selection of the material forming the separator **32** is preferably substantially similar to one of the powdered materials forming the emissive element **28,** although this is not necessary.

For example, in one particular embodiment of the present invention, the separator **32** is composed of a silver alloy material comprising silver alloyed with about 0.25 to 10 percent of an additional material selected from the group consisting of copper, aluminum, iron, lead, zinc, and alloys thereof The additional material may be in elemental or oxide form, and thus the term "copper" as used herein is intended to refer to both the elemental form as well as the oxide form, and similarly for the terms "aluminum" and the like. The emissive element **28** in this example also includes silver powder that is substantially similar to the silver comprising the separator **32.** The term "substantially similar" is defined as being similar enough so that heating the material can result in the formation of thermal conductive paths **90** (Figure 9), which are discussed below. For example, pure silver and sterling silver are considered substantially similar according to the present invention. Although the thermal conductive paths **90** are preferably formed of a substantially similar material, the thermal conductive paths can be formed from two different materials, such as any combination of the materials described herein for the emissive element **28** and the separator **32**.

With reference again to Figure 1, the electrode **14** is mounted in a plasma torch body **38,** which includes gas and liquid passageways **40** and **42,** respectively. The torch body **38** is surrounded by an outer insulated housing member **44.** A tube **46** is suspended within the central bore **48** of the electrode **14** for circulating a liquid cooling medium, such as water, through the electrode **14.** The tube **46** has an outer diameter smaller than the diameter of the bore **48** such that a space **49** exists between the tube **46** and the bore **48** to allow water to flow therein upon being discharged from the open lower end of the tube **46.** The water flows from a source (not shown) through the tube **46,** inside the internal cavity **22** and the holder **16,** and back through the space **49** to an opening **52** in the torch body **38** and to a drain hose (not shown). The passageway **42** directs injection water into the nozzle assembly **12** where it is converted into a swirling vortex for surrounding the plasma arc, as further explained below. The gas passageway **40** directs gas from a suitable source (not shown), through a gas baffle **54** of suitable high temperature material into a gas plenum chamber **56** via inlet holes **58**. The inlet holes **58** are arranged so as to cause the gas to enter in the plenum chamber **56** in a swirling fashion. The gas flows out of the plenum chamber **56** through coaxial bores **60** and **62** of the nozzle assembly **12.** The electrode **14** retains the gas baffle **54.** A high-temperature plastic isolator body **55** electrically insulates the nozzle assembly **12** from the electrode **14.**

The nozzle assembly **12** comprises an upper nozzle member **63** which defines the first bore **60,** and a lower nozzle member **64** which defines the second bore **62.** The upper nozzle member **63** is preferably a metallic material, and the lower nozzle member **64** is preferably a metallic or ceramic material. The bore **60** of the upper nozzle member **63** is in axial alignment with the longitudinal axis of the torch electrode **14.** The lower nozzle member **64** is separated from the upper nozzle member **63** by a plastic spacer element **65** and a water swirl ring **66.** The space provided between the upper nozzle member **63** and the lower nozzle member **64** forms a water chamber **67**.

The lower nozzle member **64** comprises a cylindrical body portion **70** that defines a forward or lower end portion and a rearward or upper end portion, with the bore **62** extending coaxially through the body portion **70.** An annular mounting flange **71** is positioned on the rearward end portion, and a frustoconical surface **72** is formed on the exterior of the forward end portion coaxial with the second bore **62**.

The annular flange **71** is supported from below by an inwardly directed flange **73** at the lower end of the cup **74,** with the cup **74** being detachably mounted by interconnecting threads to the outer housing member **44.** A gasket **75** is disposed between the two flanges **71** and **73.**

The bore **62** in the lower nozzle member **64** is cylindrical, and is maintained in axial alignment with the bore **60** in the upper nozzle member **63** by a centering sleeve **78** of any suitable plastic material. Water flows from the passageway **42** through openings **85** in the sleeve **78** to the injection ports **87** of the swirl ring **66,** which injects the water into the water chamber **67.** The injection ports **87** are tangentially disposed around the swirl ring **66,** to impart a swirl component of velocity to the water flow in the water chamber **67.** The water exits the water chamber **67** through the bore **62.**

A power supply (not shown) is connected to the torch electrode **14** in a series circuit relationship with a metal workpiece, which is usually grounded. In operation, a plasma arc is established between the emissive element **28** of the electrode, which acts as the cathode terminal for the arc, and the workpiece, which is connected to the anode of the power supply and is positioned below the lower nozzle member **64.** The plasma arc is started in a conventional manner by momentarily establishing a pilot arc between the electrode **14** and the nozzle assembly **12,** and the arc is then transferred to the workpiece through the bores **60** and **62.**

### METHOD OF FABRICATION

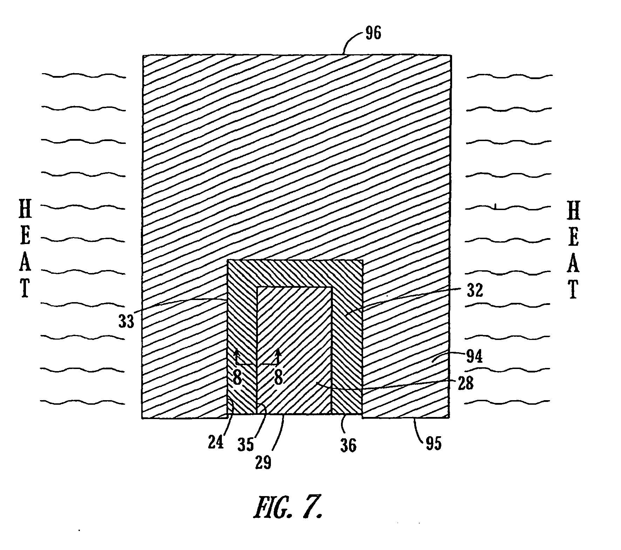

The invention also provides a simplified method for fabricating an electrode of the type described above. Figures 4-7 illustrate a preferred method of fabricating the electrode in accordance with the present invention As shown in Figure 4, the emissive element **28,** which is comprised of the powders of at least two materials, is disposed in the cavity **35** defined by the separator **32.** The powdered materials may be disposed in the cavity **35** as loose powder, but preferably the powders are pre-mixed and formed into a cylindrical pellet or the like. In particular, the powdered materials forming the emissive element **28** are compacted in the cavity **35** using a tool **80** having a generally planar circular working surface **81.** The tool **80,** which is capable of exerting pressure of up to 750,000 psi (about 5170 Mpa), is placed with the working surface **81** in contact with the powdered materials in the cavity **35.** The outer diameter of the working surface **81** is slightly smaller than the diameter of the cavity **35** defined by the separator **32.,** The tool **80** is held with the working surface **81** generally coaxial with the longitudinal axis of the torch **10,** and force is applied to the tool so as to impart axial compressive forces to the powdered materials and the separator **32** along the longitudinal axis. For example, the tool **80** may be positioned in contact with the powdered materials and separator **32** and then struck by a suitable device, such as the ram of a machine. Regardless of the specific technique used, sufficient force is imparted so as to compress the powdered material mixture to not less than 60% of theoretical density, and preferably to about 80%-90% of theoretical density, which results in the emissive element **28.** In one embodiment, the tool 80 exerts about 500,000 psi against the powdered materials. The compressing action of the powdered mixture also results in the mixture and the separator **32** being slightly deformed radially outwardly such that the emissive element **28** is tightly gripped and retained by the separator.

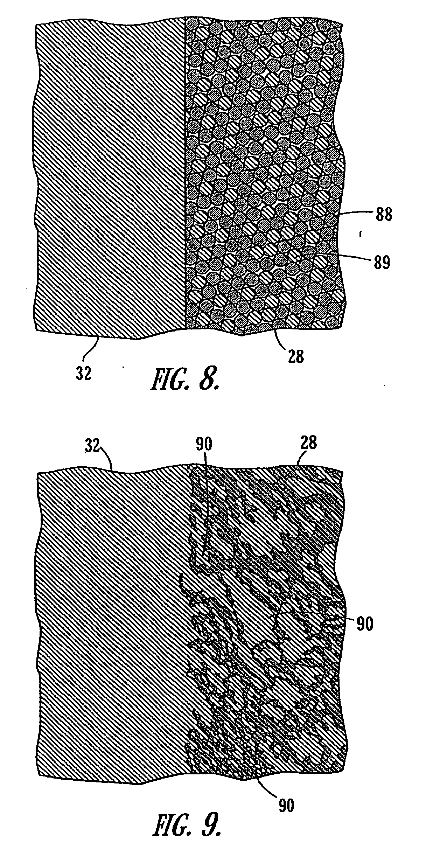

Tuming to Figure 5, a cylindrical blank **94** of copper or copper alloy is provided having a front face **95** and an opposite rear face **96.** A generally cylindrical bore is then formed, such as by drilling, in the front face **95** along the longitudinal axis so as to form the cavity **24** as described above. The emissive element **28** and separator **32** assembly is then inserted into the cavity **24,** such as by press-fitting, such that the peripheral wall **33** of the separator slidably engages the inner wall **27** of the cavity and is secured thereto.

Other methods of securing the emissive element **28** and separator **32** assembly into the cavity **24** can also be used, such as crimping, radially compressing, or utilizing electromagnetic energy.

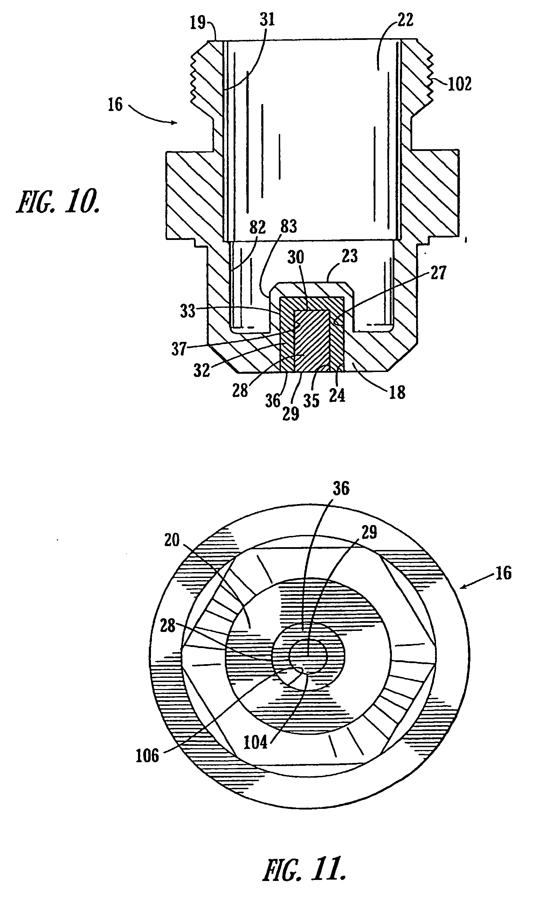

According to one embodiment shown in Figure 6, a tool **98** having a generally planar circular working surface **100** is placed with the working surface in contact with the end faces **29** and **36** of the emissive element **28** and separator **32,** respectively. The outer diameter of the working surface **100** is slightly smaller than the diameter of the cavity **24** in the cylindrical blank **94.** The tool **98** is held with the working surface **100** generally coaxial with the longitudinal axis of the torch **10,** and force is applied to the tool so as to impart axial compressive forces to the emissive element **28** and the separator **32** along the longitudinal axis. For example, the tool **98** may be positioned in contact with the emissive element **28** and separator **32** and then struck by a suitable device, such as the ram of a machine. Regardless of the specific technique used, sufficient force is imparted so as to cause the emissive element **28** and the separator **32** to be deformed radially outwardly such that the emissive element is tightly gripped and retained by the separator, and the separator is tightly gripped and retained by the cavity **24,** as shown in Figure 7.

Figure 7 also shows the addition of heat to the cylindrical blank **94,** which results in improved properties and life span of the electrode. The heating process could also be performed to the emissive element **28** and separator **32** assembly before inserting the assembly in the cylindrical blank **94,** or after further machining steps are performed on the cylindrical blank as described below. The exact heating process is dependent on the powdered materials used in the emissive element **28** and the material used in the separator **32.** In particular, the heating process is determined by the melting temperature of the powdered materials.

For example, in one advantageous embodiment the emissive element **28** is formed of hafnium and silver powders in a 2/1 ratio. Hafnium has a melting temperature of about 4040° F (2227 °C), and silver has a melting temperature of about 1761° F (960 °C). A small percentage of lanthanum oxide is also added, such as about 5% of the total composition of the emissive element **28.** The separator **32** is formed of silver. After the emissive element **28** and separator **32** assembly is positioned in the cavity **24,** the assembly is heated to a temperature of about 1400° F (760 °C), which forms unique paths for transferring heat and current, while further securing the emissive element **28** to the separator **32.** Higher or lower temperatures may also be used.

Figures 8 and 9 show detailed cross-sectional views of the emissive element **28** and the separator **32** before and after the pressing and heating operations. Specifically, Figure 8 shows a greatly enlarged view of the interface between the emissive element **28** and the separator **32** along lines 8--8 in Figure 7. In a presently preferred embodiment, the emissive element **28** is formed primarily of the powders of two materials, such as hafnium and silver in a 2/1 ratio. Hafnium powder granules **88** and silver powder granules **89** occupy the cavity **35** defined by the separator **32.** The granules **88, 89** have a diameter of about 1-10 microns, and preferably less than about 3 microns. A small amount of lanthanum oxide, such as about 5%, can also be added to the powder granules **88, 89**.

Figure 9 shows the same detailed cross-sectional view of the emissive element **28** and the separator **32** along lines 8--8 of Figure 7 after the pressing and heating operations according to a preferred embodiment of the present invention. As can be seen, the powdered materials of the emissive,element **28** have distinct phases, and at least part of the phase of the silver powder granules **89** is arranged in the emissive element to form thermal conductive paths **90** from within the emissive element to the separator **32.** In a preferred embodiment, the thermal conductive paths **90** are formed substantially of silver and, as such, also provide electrical conductive paths between the emissive element **28** and the separator **32.** Other materials may also be used to form the thermal conductive paths **90,** such as gold, platinum, rhodium, iridium, palladium, aluminum, nickel, and combinations thereof. In a preferred embodiment, the material forming the thermal conductive paths **90** is common to both the emissive element **28** and the separator **32,** or at least be substantially similar materials in the emissive element and the separator.

The following table presents conventional and experimental data showing the effects of the diameter of the emissive element **28,** the percentage of dopant used (in this case, lanthanum oxide), and the method of forming the electrode in determining the operational life span of the electrode. Note that the term "P" in the Material column represents forming the electrode by pressing the powders of the emissive element into a die to form a pellet, pressing the formed pellet into a silver separator, and then pressing the combination into a copper holder. Further note that the term "N" in the Material column represents forming the electrode by pressing the powders of the emissive element directly in the silver separator, and then pressing the combination in the copper holder. Although no significant life span changes were noted between the two methods of forming the electrode, the data is presented for clarification purposes. As shown in the table, the experimental data show significant improvements in life span over conventional electrodes. The testing conditions used to collect the data in the following table were: an ESAB PT- 15 water-injection torch with oxygen as the cutting gas. Thirty (30) second cuts were made at 360 Amps, and the flow rate of the cutting gas was 100 cfh.

| TYPE | DIAM. | DOPANT% | MAT'L. | LIFE(min.) |
|---|---|---|---|---|
| CONVEN. | 0.080 | N/A | Hfrod | 141 |
| CONVEN. | 0.080 | N/A | Hf rod | 134 |
| CONVEN. | 0.080 | N/A | Hf rod | 122 |
| CONVEN. | 0.080 | N/A | Hf rod | 142 |
| EXPER. | 0.081" | 5% | N | 288 |
| EXPER. | 0.081" | 5% | N | 300 |
| EXPER. | 0.081" | 5% | N | 370 |
| EXPER. | 0.096" | 5% | N | 276 |
| EXPER. | 0.111" | 5% | N | 272 |
| EXPER. | 0.111" | 5% | P | 220 |
| EXPER. | 0.111" | 5% | P | 326 |
| EXPER. | 0.111" | 5% | P | 297 |
| EXPER. | 0.111" | 10% | P | 196 |
| EXPER. | 0.111" | 10% | P | 288 |
| EXPER | 0.111" | 10% | P | 0 (test error) |
| EXPER | 0.111" | 10% | P | 251 |
| EXPER. | 0.081" | 0% | N | 0 |
| EXPER. | 0.081" | 0% | N | 0 |

Figure 10 is a cross-sectional view of a completed electrode according to the present invention. To complete the fabrication of the holder **16,** the rear face **96** of the cylindrical blank **94** is machined to form an open cup-shaped configuration defining the cavity **22** therein. Advantageously, the cavity **22** includes an internal annular recess **82** which defines the cylindrical post **23** and coaxially surrounds portions of the separator **32** and emissive element **28.** In addition, the internal annular recess **82** includes an internal surface **83.** In other words, the internal annular recess **82** is formed, such as by trepanning or other machining operation, to define the cylindrical post **23.**

The external periphery of the cylindrical blank **94** is also shaped as desired, including formation of external threads **102** at the rear end **19** of the holder **16**. Finally, the front face **95** of the blank **94** and the end faces **29** and **36** of the emissive element **28** and separator **32,** respectively, are machined so that they are substantially flat and flush with one another.

Figure 11 depicts an end elevational view of the holder **16.** It can be seen that the end face **36** of the separator **32** separates the end face **29** of the emissive element **28** from the front face **20** of the holder **16.** The end face **36** is annular having an inner perimeter **104** and an outer perimeter **106.** The separator **32** serves to discourage the arc from detaching from the emissive element and becoming attached to the holder **16.**

Thus, the present invention provides an electrode **14** and an electrode subassembly for use in a plasma arc torch and a method of making an electrode wherein a plurality of thermal conductive paths **90** are formed within the emissive element **28** to the separator **32** to improve the thermal and electrical conductivity of the electrode. The thermal conductive paths are preferably formed by heat before the first use of the electrode. By using powdered materials to form the emissive element **28,** the thermal conductive paths **90** can be formed during a diffusion bonding process by heating the powdered materials. In addition, by using a separator **32,** the fabrication costs of the electrode decreases by limiting the use of relatively expensive materials, such as silver, to the separator, while allowing for a less expensive material, such as copper, to be used for the holder **16.** Furthermore, the use of the silver separator **32** increases the life span of the electrode **14** when using powdered materials to form the emissive element **28** compared to using powdered materials compressed only in a copper holder.

## Claims

1. An electrode (14) adapted for supporting an arc in a plasma torch (10), comprising:
a holder (16) defining a longitudinal axis;
a relatively non-emissive member (32) secured to the holder (16) and disposed coaxially along the longitudinal axis, the non-emissive member (32) defining an opening (35) at least partially therethrough; and
an emissive element (28) disposed within the opening (35) defined by the non-emissive member (32), the emissive element (28) being comprised of at least two materials, including a first material that is emissive and a second material that is electrically and thermally conductive, ***characterised in that*** the two materials have distinct phases and **in that** at least part of the phase of the second material has been heated within the emissive element (28) before use of the electrode (14) to form thermal conductive paths (90) from within the emissive element (28) to the non-emissive member (32) so as to conduct heat generated by the arc from the emissive element (28) to the non-emissive member (32).

2. An electrode (14) according to Claim 1, ***characterised in that*** the first material of the emissive element (28) is comprised of at least one material selected from the group consisting of hafnium, zirconium, tungsten, and combinations thereof, and wherein the second material of the emissive element (28) is comprised of at least one material selected from the group consisting of silver, gold, platinum, aluminum, rhodium, iridium, palladium, nickel, and combinations thereof.

3. An electrode (14) according to Claim 1, ***characterised in that*** the first material comprises hafnium and the second material comprises silver.

4. An electrode (14) according to Claim 1, ***characterised in that*** the holder (16) is comprised of copper.

5. An electrode (14) according to Claim 1, ***characterised in that*** the emissive element (28) includes a dopant selected from the group consisting of lanthanum oxide, cerium oxide, yittrium oxide, calcium oxide, strontium oxide, barium oxide, and mixtures thereof.

6. A method of forming an electrode (14) for use in a plasma arc torch (10), ***characterised in that*** the method comprises:
mixing together powders of at least two different materials including a first material that is emissive and a second material that is thermally conductive;
disposing the mixture within an opening (35) in a separator (32) that is comprised of a substantially non-emissive, electrically and thermally conductive material; and
heating the mixture of powder materials to define a unitary emissive element (28) bonded to the separator (32), wherein thermal conductive paths (90) are formed within the emissive element (28) to the separator (32).

7. A method according to Claim 6, ***characterised in that*** the method further comprises compressing the powdered mixture to not less than 60 % of theoretical density before said heating step.

8. A method according to Claim 6, ***characterised in that*** the method further comprises selecting the first material of the emissive element (28) from at least one material of the group consisting of hafnium, zirconium, tungsten, and combinations thereof, and selecting the second material of the emissive element (28) from at least one material of the group consisting of silver, gold, platinum, rhodium, iridium, palladium, nickel, aluminum, and combinations thereof.

9. A method according to Claim 6, ***characterised in that*** the first material comprises hafnium and the second material comprises silver, and wherein said heating step comprises heating the mixture to approximately 1400° F (760 °C).

10. A method according to Claim 6, ***characterised in that*** the heating step causes the first and second materials to have distinct phases wherein at least part of the phase of the second material is arranged within the emissive element (28) to form thermal conductive paths (90) from within the emissive element (28) to the separator (32).

11. An electrode subassembly adapted for supporting an arc in a plasma arc torch (10), comprising: a separator (32) comprised of a substantially non-emissive and thermally and conductive material, the separator (32) defining an opening (35); and an emissive element (28) positioned in the opening (35) of the separator (32), said emissive element (28) being comprised of at least two materials including a first material that is emissive, and a second material that is thermally conductive ***characterised in that*** the two materials have distinct phases and **in that** at least part of the phase of the second material has been heated within the emissive element (28) before use of the electrode (14) to form thermal conductive paths (90) from within the emissive element (28) to the separator (32) so as to conduct heat generated by the arc from the emissive element (28) to the separator (32).

## Patentansprüche

1. Elektrode (14), die zur Unterstützung eines Bogens in einem Plasmabrenner (10) angepasst ist, enthaltend:
einen Halter (16), der eine Längsachse definiert;
ein relativ nicht-emissives Element (32), das an dem Halter (16) befestigt ist und entlang der Längsachse koaxial angeordnet ist, wobei das nicht-emissive Element (32) eine Öffnung (35) wenigstens teilweise dadurch definiert; und
ein emissives Element (28), das innerhalb der Öffnung (35) angeordnet ist, die durch das nicht-emissive Element (32) definiert ist, wobei das emissive Element (28) wenigstens zwei Materialien umfasst, einschließlich eines ersten Materials, das emissiv ist und eines zweiten Materials, das elektrisch und thermisch leitfähig ist, **dadurch gekennzeichnet, dass** die zwei Materialien getrennte bzw. verschiedene Phasen aufweisen und dadurch, dass wenigstens ein Teil der Phase des zweiten Materials innerhalb des emissiven Elements (28) vor Gebrauch der Elektrode (14) erhitzt wurde, um thermisch leitfähige Wege (90) von innerhalb des emissiven Elements (28) zu dem nicht-emissiven Element (32) zu bilden, um durch den Bogen erzeugte Wärme von dem emissiven Element (28) zu dem nicht-emissiven Element (32) zu leiten.

2. Elektrode (14) gemäß Anspruch 1, **dadurch gekennzeichnet, dass** das erste Material des emissiven Elements (28) wenigstens ein Material umfasst, das ausgewählt ist aus der Gruppe, bestehend aus Hafnium, Zirkonium, Wolfram und Kombinationen davon, und wobei das zweite Material des emissiven Elements (28) wenigstens ein Material umfasst, das ausgewählt ist aus der Gruppe, bestehend aus Silber, Gold, Platin, Aluminium, Rhodium, Iridium, Palladium, Nickel und Kombinationen davon.

3. Elektrode (14) gemäß Anspruch 1, **dadurch gekennzeichnet, dass** das erste Material Hafnium enthält, und das zweite Material Silber enthält.

4. Elektrode gemäß Anspruch 1, **dadurch gekennzeichnet, dass** der Halter (16) Kupfer umfasst.

5. Elektrode (14) gemäß Anspruch 1, **dadurch gekennzeichnet, dass** das emissive Element (28) ein Dotiermittel umfasst, das ausgewählt ist aus der Gruppe, bestehend aus Lanthanoxid, Ceroxid, Yttriumoxid, Calciumoxid, Strontiumoxid, Bariumoxid und Mischungen davon.

6. Verfahren zur Bildung einer Elektrode (14) zur Verwendung in einem Lichtbogenplasmabrenner (10), **dadurch gekennzeichnet, dass** das Verfahren umfasst:
Zusammenmischen von Pulvern aus wenigstens zwei verschiedenen Materialien, einschließlich eines ersten Materials, das emissiv ist, und eines zweiten Materials, das thermisch leitfähig ist,
Anordnen der Mischung innerhalb einer Öffnung (35) in einem Separator (32), der ein im wesentlichen nicht-emissives, elektrisch und thermisch leitfähiges Material umfasst; und
Erwärmen der Mischung aus Pulvermaterialien, um ein einheitliches emissives Element (28) zu definieren, das mit den Separator (32) verbunden ist,
wobei thermisch leitfähige Wege (90) innerhalb des emissiven Elements (28) zu dem Separator (32) gebildet werden.

7. Verfahren gemäß Anspruch 6, **dadurch gekennzeichnet, dass** das Verfahren weiterhin Komprimieren des pulverförmigen Gemischs auf nicht weniger als 60 % theoretischer Dichte vor dem Erwärmungsschritt umfasst.

8. Verfahren gemäß Anspruch 6, **dadurch gekennzeichnet, dass** das Verfahren weiterhin Auswählen des ersten Materials des emissives Elements (28) aus wenigstens einem Material der Gruppe, bestehend aus Hafnium, Zirkonium, Wolfram und Kombinationen davon, und Auswählen des zweiten Materials des emissiven Elements (28) aus wenigstens einem Material aus der Gruppe, bestehend aus Silber, Gold, Platin, Rhodium, Iridium, Palladium, Nickel, Aluminium und Kombinationen davon, umfasst.

9. Verfahren gemäß Anspruch 6, **dadurch gekennzeichnet, dass** das erste Material Hafnium enthält, und das zweite Material Silber enthält, und wobei der Erwärmungsschritt Erwärmen des Gemischs auf ungefähr 1400 °F (760 °C) umfasst.

10. Verfahren gemäß Anspruch 6, **dadurch gekennzeichnet, dass** der Erwärmungsschritt die ersten und zweiten Materialen veranlasst, getrennte bzw. verschiedene Phasen aufzuweisen, wobei wenigstens ein Teil der Phase des zweiten Materials innerhalb des emissiven Elements (28) angeordnet ist, um thermisch leitfähige Wege (90) von innerhalb des emissiven Elements (28) zu dem Separator (32) zu bilden.

11. Elektrodenuntergruppe, die zur Unterstützung eines Bogens in einem Lichtbogenplasmabrenner (10) angepasst ist, enthaltend: einen Separator (32), der ein im wesentlichen nicht-emissives und thermisch und leitfähiges Material umfasst, wobei der Separator (32) eine Öffnung (35) definiert; und ein emissives Element (28), das in der Öffnung (35) des Separators (32) positioniert ist, wobei das emissive Element (28) wenigstens zwei Materialien umfasst, einschließlich eines ersten Materials, das emissiv ist, und eines zweiten Materials, das thermisch leitfähig ist, **dadurch gekennzeichnet, dass** die zwei Materialien getrennte bzw. verschiedene Phasen aufweisen und **dadurch**, **dass** wenigstens ein Teil der Phase des zweiten Materials innerhalb des emissiven Elements (28) vor Gebrauch der Elektrode (14) erhitzt wurde, um thermisch leitfähige Wege (90) von innerhalb des emissiven Elements (28) zu dem Separator (32) zu bilden, um durch den Bogen erzeugte Wärme von dem emissiven Element (28) zu dem Separator (32) zu leiten.

## Revendications

1. Electrode (14) adaptée pour supporter un arc dans un chalumeau à plasma (10), comprenant :
un support (16) définissant un axe longitudinal ;
un organe relativement non émissif (32) fixé au support (16) et disposé coaxialement le long de l'axe longitudinal, l'organe non émissif (32) définissant une ouverture (35) au moins partiellement à travers celui-ci ; et
un élément émissif (28) disposé à l'intérieur de l'ouverture (35) définie par l'organe non émissif(32), l'élément émissif(28) étant constitué d'au moins deux matériaux, incluant un premier matériau qui est émissif et un second matériau qui est électriquement et thermiquement conducteur, **caractérisée en ce que** les deux matériaux ont des phases distinctes et **en ce qu'**une partie au moins de la phase du second matériau a été chauffée à l'intérieur de l'élément émissif (28) avant utilisation de l'électrode (14) pour former des voies de conduction thermique (90), de l'intérieur de l'élément émissif (28) vers l'organe non émissif (32), afin de conduire la chaleur générée par l'arc, de l'élément émissif (28) vers l'organe non émissif (32).

2. Électrode (14) selon la revendication 1, **caractérisée en ce que** le premier matériau de l'élément émissif (28) est constitué d'au moins un matériau sélectionné dans le groupe comprenant l'hafnium, le zirconium, le tungstène et des combinaisons de ceux-ci, et dans laquelle le second matériau de l'élément émissif (28) est constitué d'au moins un matériau sélectionné dans le groupe comprenant l'argent, l'or, le platine, l'aluminium, le rhodium, l'iridium, le palladium, le nickel et des combinaisons de ceux-ci.

3. Électrode (14) selon la revendication 1, **caractérisée en ce que** le premier matériau comprend de l'hafnium et le second matériau comprend de l'argent.

4. Électrode (14) selon la revendication 1, **caractérisée en ce que** le support (16) est constitué de cuivre.

5. Électrode (14) selon la revendication 1, **caractérisée en ce que** l'élément émissif (28) inclut un dopant sélectionné dans le groupe comprenant l'oxyde de lanthane, l'oxyde de cérium, l'oxyde d'yttrium, l'oxyde de calcium, l'oxyde de strontium, l'oxyde de baryum et des mélanges de ceux-ci.

6. Procédé de formation d'une électrode (14) pour une utilisation dans un chalumeau à arc plasma (10), **caractérisé en ce que** le procédé comprend :
le mélange de poudres ensemble, d'au moins deux matériaux différents incluant un premier matériau qui est émissif et un second matériau qui est thermiquement conducteur ;
le dépôt du mélange à l'intérieur d'une ouverture (35) dans un séparateur (32) qui est constitué d'un matériau électriquement et thermiquement conducteur, substantiellement non-émissif ; et
le chauffage du mélange de poudre de matériaux pour définir un élément unitaire émissif (28) lié au séparateur (32),
dans lequel des voies de conduction thermique (90) sont formées à l'intérieur de l'élément émissif (28) vers le séparateur (32).

7. Procédé selon la revendication 6, **caractérisé en ce que** le procédé comprend en outre la compression du mélange réduit en poudre à pas moins de 60 % de la densité théorique avant ladite étape de chauffage.

8. Procédé selon la revendication 6, **caractérisé en ce que** le procédé comprend en outre la sélection du premier matériau de l'élément émissif (28) parmi au moins un matériau du groupe comprenant l'hafnium, le zirconium, le tungstène et des combinaisons de ceux-ci, et la sélection du second matériau de l'élément émissif (28) parmi au moins un matériau du groupe comprenant l'argent, l'or, le platine, l'aluminium, le rhodium, l'iridium, le palladium, le nickel et des combinaisons de ceux-ci.

9. Procédé selon la revendication 6, **caractérisé en ce que** le premier matériau comprend de l'hafnium et le second matériau comprend de l'argent, et dans lequel ladite étape de chauffage comprend le chauffage du mélange à approximativement 1400 °F (760 °C).

10. Procédé selon la revendication 6, **caractérisé en ce que** l'étape de chauffage amène les premier et second matériaux à avoir des phases distinctes, dans lequel au moins une partie de la phase du second matériau est disposée à l'intérieur de l'élément émissif (28) pour former des voies de conduction thermique (90), de l'intérieur de l'élément émissif (28) vers le séparateur (32).

11. Sous-assemblage d'électrode adapté pour supporter un arc dans un chalumeau à arc plasma (10), comprenant : un séparateur (32) constitué d'un matériau thermiquement conducteur et substantiellement non-émissif, le séparateur (32) définissant une ouverture (35) ; et un élément émissif (28) situé dans l'ouverture (35) du séparateur (32), ledit élément émissif (28) étant constitué d'au moins deux matériaux incluant un premier matériau qui est émissif, et un second matériau qui est thermiquement conducteur, **caractérisé en ce que** les deux matériaux ont des phases distinctes et **en ce que** au moins une partie de la phase du second matériau a été chauffée à l'intérieur de l'élément émissif (28) avant utilisation de l'électrode (14) pour former des voies de conduction thermique (90), de l'intérieur de l'élément émissif (28) vers le séparateur (32), afin de conduire la chaleur générée par l'arc, de l'élément émissif (28) vers le séparateur (32).
